# EUROPEAN PATENT APPLICATION

(11) **EP 4 723 239 A1**
(43) Date of publication of application: **08.04.2026**
(21) Application number: 23949028.7
(22) Date of filing: 31.10.2023
(51) Int. Cl.: H01M 4/58, H01M 4/36, H01M 4/02

(54) **POSITIVE ELECTRODE ACTIVE MATERIAL AND PREPARATION METHOD THEREFOR, POSITIVE ELECTRODE SHEET, BATTERY AND ELECTRIC DEVICE**

(30) Priority: 17.08.2023 CN 202311038039
(71) Applicant: Contemporary Amperex Technology Co., Limited, Ningde, Fujian 352100 (CN)
(72) Inventor: XU, Yue, Ningde, Fujian 352100 (CN); YANG, Huiling, Ningde, Fujian 352100 (CN); QIN, Meng, Ningde, Fujian 352100 (CN); GUAN, Yingjie, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2023/128568
(87) International publication number: WO 2025/035609

(57) **Abstract**

A positive electrode active material, a method for preparing a positive electrode active material, a positive electrode plate, a battery, and a power consuming apparatus. The positive electrode active material includes a core and a first coating layer. The core includes NaₓR_{y}(PO₄)_{z}(P₂O₇)ₖ. 1≤x≤7. 1≤y≤4. 1≤z≤4. 1≤k≤4. R includes at least one of Mg, Al, Sc, Ti, V, Cr, Mn, Fe, Co, Ni, Cu, Zn, Zr, Nb, Mo, Sn, Hf, Ta, W, or Pb. The first coating layer is formed on at least a part of the core. The first coating layer includes MaOb. M includes at least one of Ca, Bi, Ba, Ti, Al, Nb, Mg, Fe, Cu, Zn, Mn, Ni, or Co. 1≤a≤7. 1≤b≤12.

## Description

### TECHNICAL FIELD

The present application belongs to the field of batteries, and specifically, relates to a positive electrode active material, a method for preparing a positive electrode active material, a positive electrode plate, a battery, and a power consuming apparatus.

### BACKGROUND

Problems such as increasing shortage of lithium resources, constant rising of prices of upstream materials, lagging of development of cyclic recovery technologies, and low utilization of cyclic recovery of old batteries make lithium-ion batteries face great challenges. A sodium-ion battery can implement charging and discharging by using a deintercalation process of sodium ions between a positive electrode and a negative electrode. In addition, a storage capacity of sodium resources is far richer than that of lithium resources, sodium is more widely distributed than lithium, and costs of sodium are far lower than those of lithium. Therefore, the sodium-ion battery has become a new-generation electrochemical system that has the potential to replace a lithium secondary battery. However, because stability of an existing positive electrode active material is poor, the sodium-ion battery has low cycle performance.

### SUMMARY

In view of the technical problem existing in the background, the present application provides a positive electrode active material, to improve cycle performance of a battery including the positive electrode active material.

To achieve the foregoing objective, an aspect of the present application provides a positive electrode active material. The positive electrode active material includes a core and a first coating layer.

The core includes NaₓR_{y}(PO₄)_{z}(P₂O₇)ₖ. 1≤x≤7. 1≤y≤4. 1≤z≤4. 1≤k≤4. R includes at least one of Mg, Al, Sc, Ti, V, Cr, Mn, Fe, Co, Ni, Cu, Zn, Zr, Nb, Mo, Sn, Hf, Ta, W, or Pb.

The first coating layer is formed on at least a part of the core. The first coating layer includes MₐO_{b}. M includes at least one of Ca, Bi, Ba, Ti, Al, Nb, Mg, Fe, Cu, Zn, Mn, Ni, or Co. 1≤a≤7. 1≤b≤12.

The present application includes at least the following beneficial effects: In the present application, the first coating layer including MₐO_{b} is formed on the at least a part of the core including NaₓR_{y}(PO₄)_{z}(P₂O₇)ₖ, where M includes at least one of Ca, Bi, Ba, Ti, Al, Mg, Fe, Cu, Zn, Mn, Ni, or Co. The first coating layer with the composition may reduce contact between the core and H₂O, CO₂, and the like in air, to improve environmental stability and moisture resistance of the material, thereby improving cycle performance of a battery. In addition, the first coating layer may reduce a side reaction between a surface of the core and an electrolyte solution, stabilize an interface between the positive electrode active material and the electrolyte solution, and improve stability of the material, thereby improving the cycle performance of the battery including the material. In addition, the first coating layer with the composition does not reduce first-cycle Coulombic efficiency of the positive electrode active material, so that the battery maintains high first-cycle Coulombic efficiency.

In some embodiments of the present application, the core includes at least one of Na₄R₃(PO₄)₂P₂O₇ or Na₇V₄(PO₄)₄P₂O₇. R includes at least one of Fe, Ni, Co, or Mn.

In some embodiments of the present application, MₐO_{b} includes at least one of TiO₂, Al₂O₃, Nb₂O₅, MgO, Co₃O₄, CaTiO₃, Bi₄Ti₃O₁₂, or BaTiO₃. In this way, the cycle performance of the battery including the positive electrode active material can be improved, and the battery can maintain the high first-cycle Coulombic efficiency.

In some embodiments of the present application, based on a total mass of the positive electrode active material, a content of the first coating layer is w%.

Based on a total mass of the core, a residual alkali content of the core is z%. 0.06≤z/w≤3, and optionally 0.06≤z/w≤1. In this way, the cycle performance of the battery including the positive electrode active material can be improved, and the battery can maintain the high first-cycle Coulombic efficiency.

In some embodiments of the present application, 1%≤w%≤3%, and optionally 1.5%≤w%≤2.5%. In this way, the cycle performance of the battery including the positive electrode active material can be improved, and the battery can maintain the high first-cycle Coulombic efficiency.

In some embodiments of the present application, 0.2%≤z%≤3%, and optionally 0.2%≤z%≤0.6%.

In some embodiments of the present application, a thickness of the first coating layer ranges from 1 nm to 10 nm, and optionally ranges from 2 nm to 8 nm. In this way, the cycle performance of the battery including the positive electrode active material can be improved, and the battery can maintain the high first-cycle Coulombic efficiency.

In some embodiments of the present application, the positive electrode active material further includes a second coating layer. The second coating layer is formed on at least a part of the core. The first coating layer is formed on at least a part of the second coating layer. The second coating layer includes carbon. In this way, environmental stability, moisture resistance, and conductivity of the positive electrode active material can be improved, thereby improving kinetic performance and the cycle performance of the battery including the positive electrode active material.

In some embodiments of the present application, based on the total mass of the positive electrode active material, a content of carbon in the second coating layer is n%. 0.16≤n/w≤1.5, and optionally 0.32≤n/w≤0.8. In this way, the environmental stability, the moisture resistance, and the conductivity of the positive electrode active material can be improved, thereby improving the kinetic performance and the cycle performance of the battery including the positive electrode active material.

In some embodiments of the present application, 0.5%≤n%≤1.5%, and optionally 0.8%≤n%≤1.2%. In this way, the environmental stability, the moisture resistance, and the conductivity of the positive electrode active material can be improved, thereby improving the kinetic performance and the cycle performance of the battery including the positive electrode active material.

In some embodiments of the present application, the positive electrode active material satisfies at least one of the following conditions:
a volume average particle size Dv50 of the positive electrode active material ranges from 2 µm to 8 µm, and optionally ranges from 2 µm to 5 µm;

Dv99 of the positive electrode active material ranges from 10 µm to 40 µm, and optionally ranges from 15 µm to 30 µm;
a BET specific surface area of the positive electrode active material ranges from 3 m²/g to 11 m²/g, and optionally ranges from 7 m²/g to 10 m²/g; and
a compaction density of the positive electrode active material under a pressure of 100 MPa ranges from 1.3 g/cm³ to 2.1 g/cm³, and optionally ranges from 1.7 g/cm³ to 1.9 g/cm³.

A second aspect of the present application provides a method for preparing a positive electrode active material, including:
providing a core material, where the core material includes NaₓR_{y}(PO₄)_{z}(P₂O₇)ₖ, 1≤x≤7, 1≤y≤4, 1≤z≤2, 1≤k≤4, and R includes at least one of Mg, Al, Sc, Ti, V, Cr, Mn, Fe, Co, Ni, Cu, Zn, Zr, Nb, Mo, Sn, Hf, Ta, W, or Pb; and
mixing and sintering the core material and MₐO_{b}, where M includes at least one of Ti, Al, Mg, Fe, Cu, Zn, Mn, Ni, or Co, 1≤a≤7, and 1≤b≤12, to obtain a positive electrode active material.

In this way, by using the method in the present application, a first coating layer including MₐO_{b} (where M includes at least one of Ti, Al, Mg, Fe, Cu, Zn, Mn, Ni, or Co, 1≤a≤7, and 1≤b≤12) is formed on a core including NaₓR_{y}(PO₄)_{z}(P₂O₇)ₖ. The first coating layer with the composition may reduce contact between the core and H₂O, CO₂, and the like in air, to improve environmental stability and moisture resistance of the material, thereby improving cycle performance of a battery including the material. In addition, the first coating layer with the composition does not deteriorate first-cycle Coulombic efficiency of the positive electrode active material, so that the battery maintains high first-cycle Coulombic efficiency.

In some embodiments of the present application, a sintering temperature ranges from 250°C to 550°C, and holding time ranges from 2h to 8h.

In some embodiments of the present application, the core material and a carbon source are mixed and sintered in advance before the core material and MₐO_{b} are mixed and sintered. In this way, a second coating layer including carbon may be formed on a surface of the core material, to improve environmental stability, moisture resistance, and conductivity of the positive electrode active material, thereby improving the cycle performance and kinetic performance of the battery including the positive electrode active material.

A third aspect of the present application provides a positive electrode plate. The positive electrode plate includes the positive electrode active material according to the first aspect of the present application or a positive electrode active material obtained by using the method according to the second aspect of the present application.

A fourth aspect of the present application provides a battery. The battery includes the positive electrode plate according to the third aspect of the present application.

**In** some embodiments the present application, the battery includes a sodium-ion battery.

A fifth aspect of the present application provides a power consuming apparatus. The power consuming apparatus includes the battery according to the fourth aspect of the present application.

Additional aspects and advantages of the present application will be given in the following description, some of which will become apparent from the following description or may be learned from practices of the present application.

### BRIEF DESCRIPTION OF THE DRAWINGS

Various other advantages and benefits will become apparent to those of ordinary skill in the art upon reading the following detailed description of the preferred embodiments. The accompanying drawings are only for the purpose of illustrating the preferred embodiments and are not construed as limiting the present application. In addition, in all the accompanying drawings, same components are indicated by same reference numerals. In the accompanying drawings:
FIG. 1 is a schematic diagram of a positive electrode active material according to an embodiment of the present application;
FIG. 2 is a schematic diagram of a positive electrode active material according to another embodiment of the present application;
FIG. 3 is a schematic diagram of a battery according to an embodiment of the present application;
FIG. 4 is an exploded view of the battery shown in FIG. 3 according to an embodiment of the present application;
FIG. 5 is a schematic diagram of a battery module according to an embodiment of the present application;
FIG. 6 is a schematic diagram of a battery pack according to an embodiment of the present application;
FIG. 7 is an exploded view of the battery pack shown in FIG. 6 according to an embodiment of the present application;
FIG. 8 is a schematic diagram of a power consuming apparatus using a battery as a power supply according to an embodiment of the present application;
FIG. 9 is an XRD comparison diagram of positive electrode active materials according to Example 1 and Comparative example 1 of the present application; and
FIG. 10 is a distribution diagram of Ti elements in an EDS spectrum of a positive electrode active material according to Example 1 of the present application.

### Reference numerals:

1-battery; 11-housing; 12-electrode assembly; 13-cover plate; 2-battery module; 3-battery pack; 31-upper box; 32-lower box; 20-positive electrode active material; 21-core; 22-first coating layer; and 23-second coating layer.

### DETAILED DESCRIPTION

Embodiments of the technical solutions of the present application are described in detail below. The following embodiments are only used to illustrate the technical solutions of the present application more explicitly, and are thus only interpreted as examples, rather than used to limit the protection scope of the present application.

"Embodiment" mentioned in this specification means that particular features, structures, or characteristics described with reference to the embodiment may be included in at least one embodiment of the present application. The term appearing at different positions of this specification may not refer to the same embodiment or an independent or alternative embodiment that is mutually exclusive with another embodiment. It shall be explicitly and implicitly understood by a person skilled in the art that the embodiments described herein may be combined with other embodiments.

A "range" disclosed in the present application is defined in a form of a lower limit and an upper limit. A given range is defined by selecting a lower limit and an upper limit, and the selected lower limit and upper limit define boundaries of a particular range. The range defined in this way may include or exclude end values, and may be arbitrarily combined, that is, any lower limit can be combined with any upper limit to form a range. For example, if ranges of 60 to 120 and 80 to 110 are listed for specific parameters, it is also expected to be understood as ranges of 60 to 110 and 80 to 120. In addition, if minimum range values 1 and 2 are listed, and if maximum range values 3, 4, and 5 are listed, the following ranges can all be expected: 1 to 3, 1 to 4, 1 to 5, 2 to 3, 2 to 4, and 2 to 5. In the present application, unless otherwise specified, a numerical range "a to b" represents an abbreviated representation of any combination of real numbers between a to b, where both a and b are real numbers. For example, a value range "0 to 5" indicates that all real numbers between "0 to 5" are listed in this specification, and "0 to 5" is only an abbreviated representation of these value combinations. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with each other to form new technical solutions.

Unless otherwise specified, all technical features and optional technical features of the present application may be combined with each other to form new technical solutions.

If there is no special explanation, all steps of the present application may be performed sequentially or randomly, and preferably sequentially. For example, that "the method includes step (a) and step (b)" indicates that the method may include step (a) and step (b) performed sequentially, or the method may include step (b) and step (a) performed sequentially. For example, that "the method may further include step (c)" indicates that step (c) may be added to the method in any order. For example, the method may include step (a), step (b), and step (c), may include step (a), step (c), and step (b), or may include step (c), step (a), and step (b).

With the technical development and increasing requirements of electric automobiles and chargeable mobile devices, a secondary battery is used as a representative of a new energy field, and research work related to the secondary battery also rapidly develops. Compared with a conventional lithium-ion battery, a sodium-ion battery has a strong price advantage, and has a wide application prospect in a large-scale electric storage system.

Because a polyanionic phosphate positive electrode material has sufficient resources, is environmentally friendly, is easy to mass production, has open sodium-ion diffusion channels, and has good thermal stability, the polyanionic phosphate positive electrode material becomes one of hot positive electrode active materials of the sodium-ion battery. However, due to a process, a formula, and the like, residual alkali (where the residual alkali includes sodium bicarbonate, sodium carbonate, and the like) on a surface of the polyanionic phosphate positive electrode material is prone to reaction with H₂O, CO₂, and the like in air, causing poor environmental stability and poor moisture resistance of the material, and further degrading cycle performance of a battery.

In the present application, a first coating layer including MₐO_{b} is formed on at least a part of a core including NaₓR_{y}(PO₄)_{z}(P₂O₇)ₖ, where M includes at least one of Ca, Bi, Ba, Ti, Al, Nb, Mg, Fe, Cu, Zn, Mn, Ni, or Co. The first coating layer with the composition may reduce contact between the core and H₂O, CO₂, and the like in air, to improve environmental stability and moisture resistance of the material, thereby improving cycle performance of a battery. In addition, the first coating layer may reduce a side reaction between a surface of the core and an electrolyte solution, stabilize an interface between the positive electrode active material and the electrolyte solution, and improve stability of the material, thereby improving the cycle performance of the battery including the material. In addition, the first coating layer with the composition does not reduce first-cycle Coulombic efficiency of the positive electrode active material, so that the battery maintains high first-cycle Coulombic efficiency.

The positive electrode active material disclosed in the embodiments of the present application is applicable to a sodium-ion battery, and the battery disclosed in the embodiments of the present application may be used in a power consuming device using a battery as a power supply or various energy storage systems using a battery as an energy storage element. The power consuming device may include, but is not limited to a mobile phone, a tablet computer, a notebook computer, an electric toy, an electric tool, an electric bicycle, an electric vehicle, a ship, a spacecraft, or the like. The electric toy may include a fixed or mobile electric toy, for example, a game console, an electric vehicle toy, an electric ship toy, or an electric aircraft toy. The spacecraft may include an aircraft, a rocket, a space shuttle, a spaceship, or the like.

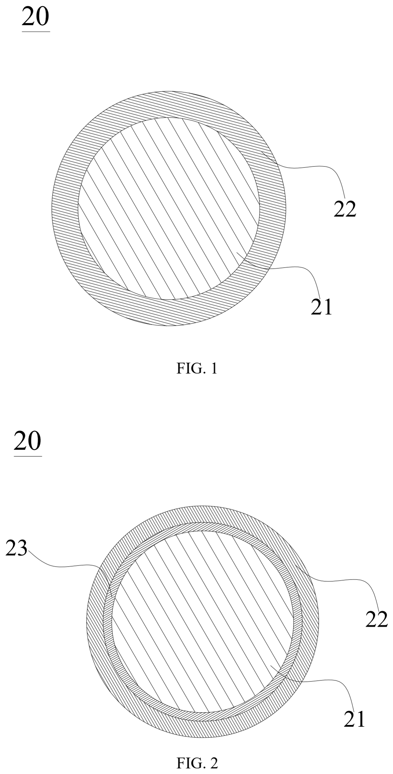

A first aspect of the present application provides a positive electrode active material. Referring to FIG. 1, a positive electrode active material 20 includes a core 21 and a first coating layer 22. The core includes NaₓR_{y}(PO₄)_{z}(P₂O₇)ₖ. 1≤x≤7. 1≤y≤4. 1≤z≤4. 1≤k≤4. R includes at least one of Mg, Al, Sc, Ti, V, Cr, Mn, Fe, Co, Ni, Cu, Zn, Zr, Nb, Mo, Sn, Hf, Ta, W, or Pb. The first coating layer 22 is formed on at least a part of the core 21. The first coating layer 22 includes MₐO_{b}. M includes at least one of Ca, Bi, Ba, Ti, Al, Nb, Mg, Fe, Cu, Zn, Mn, Ni, or Co. 1≤a≤7. 1≤b≤12.

The present application includes at least the following beneficial effects: In the present application, the first coating layer 22 including MₐO_{b} is formed on the at least a part of the core 21 including NaₓR_{y}(PO₄)_{z}(P₂O₇)ₖ, where M includes at least one of Ca, Bi, Ba, Ti, Al, Nb, Mg, Fe, Cu, Zn, Mn, Ni, or Co. The first coating layer 22 with the composition may reduce contact between the core 21 and H₂O, CO₂, and the like in air, to improve environmental stability and moisture resistance of the material, thereby improving cycle performance of a battery. In addition, the first coating layer 22 may reduce a side reaction between a surface of the core 21 and an electrolyte solution, stabilize an interface between the positive electrode active material 20 and the electrolyte solution, and improve stability of the material, thereby improving the cycle performance of the battery including the material. In addition, the first coating layer 22 with the composition does not reduce first-cycle Coulombic efficiency of the positive electrode active material 20, so that the battery maintains high first-cycle Coulombic efficiency.

In some embodiments of the present application, in NaₓR_{y}(PO₄)_{z}(P₂O₇)ₖ, 1≤x≤7. For example, x is valued as follows: 2≤x≤6, 3≤x≤5, 3≤x≤4, or the like. In this way, the core 21 includes sodium ions with the content, to increase a gram capacity of the battery, so that the battery has a high capacity.

In some embodiments of the present application, in NaₓR_{y}(PO₄)_{z}(P₂O₇)ₖ, R includes at least one of Mg, Al, Sc, Ti, V, Cr, Mn, Fe, Co, Ni, Cu, Zn, Zr, Nb, Mo, Sn, Hf, Ta, W, or Pb, and 1≤y≤4. For example, 2≤x≤4, or 3≤x≤4. In this way, the positive electrode active material with the composition in the present application has advantages such as high chemical stability, thermal stability, electrochemical stability, and specific capacity.

In some embodiments of the present application, in NaₓR_{y}(PO₄)_{z}(P₂O₇)ₖ, 1≤z≤4, and 1≤k≤4. For example, 2≤z≤4, or 3≤z≤4; and 2≤k≤4, or 3≤k≤4.

In an example, NaₓR_{y}(PO₄)_{z}(P₂O₇)ₖ may include at least one of Na₄Fe₃(PO₄)₂P₂O₇, Na₄Ni₃(PO₄)₂P₂O₇, Na₄Co₃(PO₄)₂P₂O₇, Na₄Mn₃(PO₄)₂P₂O₇, Na₇V₄(PO₄)₄P₂O₇, Na_{4.02}Fe_{2.85}(PO₄)₂P₂O₇, Na₄Fe_{2.9}Mg_{0.1}(PO₄)₂P₂O₇, Na₄Fe_{2.95}Al_{0.05}(PO₄)₂P₂O₇, or Na₄Fe_{2.99}Cu_{0.01}(PO₄)₂P₂O₇.

In some other embodiments of the present application, the core 21 includes at least one of Na₄R₃(PO₄)₂P₂O₇ or Na₇V₄(PO₄)₄P₂O₇. R includes at least one of Fe, Ni, Co, or Mn. For example, Na₄R₃(PO₄)₂P₂O₇ includes Na₄Fe₃(PO₄)₂P₂O₇, Na₄Ni₃(PO₄)₂P₂O₇, Na₄Co₃(PO₄)₂P₂O₇, and Na₄Mn₃(PO₄)₂P₂O₇. In this way, by using the core 21 with the composition, a gram capacity of the positive electrode active material 20 can be increased, thereby increasing the capacity of the battery.

It should be noted that, a charging and discharging process of the battery is accompanied with deintercalation and consumption of Na, and when the battery is discharged to different states, Na has different molar contents. In the list of the core 21 in the present application, a molar content of Na is in an initial state of a material, that is, a state before the material is delivered. The positive electrode active material is applied to a battery system. After charging and discharging cycles, the molar content of Na changes.

In the list of the core 21 in the present application, a molar content of O is merely a theoretical state value. Oxygen released by lattices causes a change in the molar content of oxygen, and an actual molar content of O floats.

In some embodiments of the present application, the first coating layer 22 is formed on at least a part of the core 21. The first coating layer 22 includes MₐO_{b}. M includes at least one of Ca, Bi, Ba, Ti, Al, Nb, Mg, Fe, Cu, Zn, Mn, Ni, or Co. 1≤a≤7. 1≤b≤12. For example, a is valued as follows: 2≤a≤6, 3≤a≤5, 3≤a≤4, or the like. In this way, in the present application, the first coating layer 22 including MₐO_{b} with the composition is formed on the at least a part of the core 21 including NaₓR_{y}(PO₄)_{z}(P₂O₇)ₖ. The first coating layer 22 with the composition may reduce contact between the core 21 and H₂O, CO₂, and the like in air, to improve the environmental stability and the moisture resistance of the material, thereby improving the cycle performance of the battery. In addition, the first coating layer 22 may reduce the side reaction between the surface of the core 21 and the electrolyte solution, stabilize the interface between the positive electrode active material 20 and the electrolyte solution, and improve the stability of the material, thereby improving the cycle performance of the battery including the material. In addition, the first coating layer 22 with the composition does not reduce the first-cycle Coulombic efficiency of the positive electrode active material 20, so that the battery maintains the high first-cycle Coulombic efficiency.

In an example, MₐO_{b} may include at least one of CaO, Bi₂O₃, BaO, TiO₂, Al₂O₃, Nb₂O₅, MgO, FeO, CuO, ZnO, MnO₂, NiO, or Co₃O₄.

In some embodiments of the present application, MₐO_{b} may include at least one of TiO₂, Al₂O₃, Nb₂O₅, MgO, Co₃O₄, CaTiO₃, Bi₄Ti₃O₁₂, or BaTiO₃. In this way, in the present application, the first coating layer 22 with the composition is formed on the core 21. The first coating layer 22 with the composition may reduce contact between the core 21 and H₂O, CO₂, and the like in air, to improve the environmental stability and the moisture resistance of the material, thereby improving the cycle performance of the battery. In addition, the first coating layer 22 may reduce the side reaction between the surface of the core 21 and the electrolyte solution, stabilize the interface between the positive electrode active material 20 and the electrolyte solution, and improve the stability of the material, thereby further improving the cycle performance of the battery including the material. In addition, the first coating layer 22 with the composition does not reduce the first-cycle Coulombic efficiency of the positive electrode active material 20, so that the battery maintains the high first-cycle Coulombic efficiency.

In some embodiments of the present application, based on a total mass of the positive electrode active material 20, a content of the first coating layer 22 is w%. Based on a total mass of the core 21, a residual alkali content of the core 21 is z%. 0.06≤z/w≤3. For example, 0.08≤z/w≤3, 0.1≤z/w≤3, 0.2≤z/w≤2.8, 0.5≤z/w≤2.5, 0.7≤z/w≤2.2, 1≤z/w≤2, 1.2≤z/w≤1.8, or 1.5≤z/w≤1.7. Specifically, due to a process, a formula, and the like, residual alkali (where the residual alkali includes sodium bicarbonate, sodium carbonate, and the like) on the surface of the core 21 is prone to reaction with H₂O, CO₂, and the like in air, causing poor environmental stability and poor moisture resistance of the material. However, in the present application, the content w% of the first coating layer 22 and the residual alkali content z% of the core 21 are controlled to satisfy the foregoing ratio, so that the environmental stability and the moisture resistance of the material can be significantly improved, thereby improving the cycle performance of the battery. In some other embodiments of the present application, the content w% of the first coating layer 22 and the residual alkali content z% of the core 21 satisfy: 0.06≤z/w≤1.

In the present application, a test for determining the residual alkali content z% of the core 21 may be performed by using an instrument and a method that are well known in the art. For example, reference may be made to a test for free lithium in GB/T 9725-2007, Chemical reagent-General rule for potentiometric titration. Free lithium in the core in the positive electrode active material of the sodium-ion battery is tested, and a test result is obtained through conversion of a ratio of a molecular weight of residual sodium to a molecular weight of residual lithium. For example, a molecular weight of NaHCO₃ is 84, a molecular weight of LiHCO₃ is 68, and a content of free lithium obtained from a test result is 0.1%. According to a ratio of the molecular weight of NaHCO₃ to the molecular weight of LiHCO₃, a content of free lithium of the positive electrode material obtained through conversion is 0.124%. A method for testing a content of free lithium of a positive electrode material in GB/T 9725-2007, Chemical reagent-General rule for potentiometric titration includes: A test liquid is sampled and prepared according to a specification in a product standard. A specified electrode is inserted, an electromagnetic stirrer is started, and titration is performed by using a specified standard titration solution. A standard titration solution whose volume is approximately 90% of a volume of a to-be-titered solution is dropped from a burette, and a potential or a pH value of the solution is measured. Later, each time 1 mL or an appropriate amount of the standard titration solution is added, the potential or the pH value is measured once. Before and after a stoichiometric point, each time 0.1 mL of the standard titration solution is added, the potential or the pH value is measured once. The titration is continued until the potential or the pH value has no large change. A reading of the burette and the measured potential or pH value are recorded after the standard titration solution is added each time, and an end point of the titration is determined by plotting or second-time derivative.

In some embodiments of the present application, based on the total mass of the positive electrode active material 20, the content w% of the first coating layer 22 satisfies: 1%≤w%≤3%. For example, 1.2%≤w%≤2.8%, 1.5%≤w%≤2.5%, 1.7%≤w%≤2.2%, or 1.8%≤w%≤2%. In this way, the content w% of the first coating layer 22 in the present application satisfies the foregoing condition, so that the environmental stability and the moisture resistance of the material can be improved, thereby improving the cycle performance of the battery. In addition, the first coating layer 22 with the content may reduce the side reaction between the surface of the core 21 and the electrolyte solution, stabilize the interface between the positive electrode active material 20 and the electrolyte solution, and improve the stability of the material, thereby improving the cycle performance of the battery including the material. In addition, the first coating layer 22 with the content does not reduce the first-cycle Coulombic efficiency of the positive electrode active material 20, so that the battery maintains the high first-cycle Coulombic efficiency. In some other embodiments of the present application, based on the total mass of the positive electrode active material 20, the content w% of the first coating layer 22 satisfies: 1.5%≤w%≤2.5%.

In some embodiments of the present application, based on the total mass of the core 21, the residual alkali content z% of the core 21 satisfies: 0.2%≤z%≤3%. For example, 0.5%≤z%≤2.8%, 0.8%≤z%≤2.5%, 1%≤z%≤2.2%, 1.2%≤z%≤2%, or 1.5%≤z%≤1.8%. In this way, the residual alkali content z% of the core 21 in the present application satisfies the foregoing condition, so that gas generation caused by decomposition of residual alkali during a cycle of the battery can be reduced, and gas expansion of the battery can be reduced, thereby improving the cycle performance of the battery. In some embodiments of the present application, based on the total mass of the positive electrode active material 20, the residual alkali content z% of the core 21 satisfies: 0.2%≤z%≤0.6%.

In some embodiments of the present application, a thickness of the first coating layer 22 may range from 1 nm to 10 nm, for example, ranges from 2 nm to 9 nm, 3 nm to 8 nm, 4 nm to 7 nm, or 5 nm to 6 nm. In this way, the thickness of the first coating layer 22 in the present application satisfies the foregoing condition, so that the environmental stability and the moisture resistance of the material can be improved, thereby improving the cycle performance of the battery. In addition, the first coating layer 22 with the thickness may reduce the side reaction between the surface of the core 21 and the electrolyte solution, stabilize the interface between the positive electrode active material 20 and the electrolyte solution, and improve the stability of the material, thereby improving the cycle performance of the battery including the material. In addition, the first coating layer 22 with the thickness does not reduce the first-cycle Coulombic efficiency of the positive electrode active material, so that the battery maintains the high first-cycle Coulombic efficiency. In some other embodiments of the present application, the thickness of the first coating layer 22 ranges from 2 nm to 8 nm.

In some embodiments of the present application, referring to FIG. 2, the positive electrode active material 20 further includes a second coating layer 23. The second coating layer 23 is formed on at least a part of the core 21. The first coating layer 22 is formed on at least a part of the second coating layer 23. The second coating layer 23 includes carbon. In this way, an outer surface of the core 21 is coated with the second coating layer 23 including carbon, so that the second coating layer 23 can improve environmental stability and moisture resistance of the core 21, and can also improve conductivity of the core 21, thereby improving the kinetic performance and the cycle performance of the battery including the positive electrode active material 20.

In some embodiments of the present application, based on the total mass of the positive electrode active material 20, a content of carbon in the second coating layer 23 is n%. 0.16≤n/w≤1.5. For example, 0.18≤n/w≤1.5, 0.2≤n/w≤1.5, 0.25≤n/w≤1.5, 0.3≤n/w≤1.5, 0.35≤n/w≤1.45, 0.4≤n/w≤1.4, 0.45≤n/w≤1.35, 0.5≤n/w≤1.3, 0.55≤n/w≤1.25, 0.6≤n/w≤1.2, 0.65≤n/w≤1.1, 0.7≤n/w≤1, 0.8≤n/w≤0.9, or 0.85≤n/w≤0.9. In this way, the content n% of carbon in the second coating layer 23 and the content w% of the first coating layer 22 in the present application are controlled to fall within the foregoing range, so that environmental stability, moisture resistance, and conductivity of the positive electrode active material 20 can be significantly improved, thereby improving the kinetic performance and the cycle performance of the battery including the positive electrode active material 20. In some other embodiments of the present application, based on the total mass of the positive electrode active material 20, the content n% of carbon in the second coating layer 23 satisfies: 0.32≤n/w≤0.8.

In some embodiments of the present application, based on the total mass of the positive electrode active material 20, a content of carbon in the second coating layer 23 is n%. 0.5%≤n%≤1.5%. For example, 0.6%≤n%≤1.4%, 0.7%≤n%≤1.3%, 0.8%≤n%≤1.3%, 0.9%≤n%≤1.2%, or 1%≤n%≤1.1%. In this way, the content n% of carbon in the second coating layer 23 in the present application is controlled to fall within the foregoing range, so that environmental stability, moisture resistance, and conductivity of the positive electrode active material 20 can be significantly improved, thereby improving the kinetic performance and the cycle performance of the battery including the positive electrode active material 20. In some other embodiments of the present application, based on the total mass of the positive electrode active material 20, the content n% of carbon in the second coating layer 23 satisfies: 0.8%≤n%≤1.2%.

In some embodiments of the present application, a volume average particle size Dv50 of the positive electrode active material 20 ranges from 2 µm to 8 µm. For example, Dv50 of the positive electrode active material may range from 2.5 µm to 7.5 µm, 3 µm to 7 µm, 3.5 µm to 6.5 µm, 4 µm to 6 µm, 4.5 µm to 5.5 µm, or 4.8 µm to 5 µm. In some other embodiments of the present application, the volume average particle size Dv50 of the positive electrode active material 20 ranges from 2 µm to 5 µm.

In some embodiments of the present application, Dv99 of the positive electrode active material 20 ranges from 10 µm to 40 µm. For example, Dv99 of the positive electrode active material may range from 12 µm to 37 µm, 15 µm to 35 µm, 18 µm to 32 µm, 20 µm to 30 µm, 22 µm to 28 µm, or 23 µm to 25 µm. In some other embodiments of the present application, Dv99 of the positive electrode active material 20 ranges from 15 µm to 30 µm.

In the present application, the volume average particle size Dv50 is a corresponding particle size when an accumulated volume distribution percentage reaches 50%, and Dv99 is a corresponding particle size when an accumulated volume distribution percentage reaches 99%. For example, for methods for testing volume average particle sizes Dv50 and Dv99, reference may be made to the standard GB/T 19077-2016, and measurement is performed by using a laser particle size analyzer (for example, a Malvern Master Size 3000).

In some embodiments of the present application, a BET specific surface area of the positive electrode active material 20 ranges from 3 m²/g to 11 m²/g. For example, the BET specific surface area of the positive electrode active material 20 may range from 4 m²/g to 10 m²/g, 5 m²/g to 9 m²/g, 6 m²/g to 8 m²/g, or 7 m²/g to 7.5 m²/g. In some other embodiments of the present application, the BET specific surface area of the positive electrode active material 20 ranges from 7 m²/g to 10 m²/g.

In the present application, the BET specific surface area of the positive electrode active material 20 has a well-known meaning in the art, and may be measured by using an instrument and a method well-known in the art. For example, the BET specific surface area of the positive electrode active material 20 may be tested by using the following method: An American Micromeritics' multi-station fully automatic specific surface area and aperture analyzer GeminiVII2390 is used. About 7 g of sample is taken and placed in a 9 cc long tube with bubbles, and is degassed at 200°C for 2h. Then, the sample is placed in the main machine to obtain data of the BET specific surface area of the positive electrode active material 20 through testing.

In some embodiments of the present application, a compaction density of the positive electrode active material 20 under a pressure of 100 MPa ranges from 1.3 g/cm³ to 2.1 g/cm³. For example, the compaction density of the positive electrode active material 20 under the pressure of 100 MPa may range from 1.4 g/cm³ to 2 g/cm³, 1.5 g/cm³ to 1.9 g/cm³, 1.6 g/cm³ to 1.8 g/cm³, or 1.7 g/cm³ to 1.8 g/cm³. In some embodiments of the present application, a compaction density of the positive electrode active material 20 under a pressure of 100 MPa ranges from 1.7 g/cm³ to 1.9 g/cm³.

In the present application, the "compaction density" has a well-known meaning in the art, and may be measured by using an instrument and a method well-known in the art. For example, the following testing method may be used: A mass m of powder is placed in a dedicated compaction die. The die is placed in a compaction density instrument, and a pressure of 100 MPa is set. A thickness volume v of the power under a pressure of 300 MPa is tested in the device. The compaction density is calculated based on that density=mass m/volume v. (For details, reference is made to GB/T 24533-2009).

Specifically, when at least one of the volume average particle size Dv50, the volume average particle size Dv99, the specific surface area, and the compaction density of the positive electrode active material 20 under the pressure of 100 MPa in the present application falls within the foregoing range, a conduction distance in the positive electrode active material 20 is short, and a surface side reaction is small, thereby promoting the positive electrode active material 20 to exert a gram capacity of the positive electrode active material 20, and improving a capacity retention rate of the battery including the positive electrode active material 20.

A second aspect of the present application provides a method for preparing the positive electrode active material according to the first aspect. The method includes the following steps:
S100: Provide a core material

In some embodiments of the present application, the core material includes NaₓR_{y}(PO₄)_{z}(P₂O₇)ₖ. 1≤x≤7. 1≤y≤4. 1≤z≤2. 1≤k≤4. R includes at least one of Mg, Al, Sc, Ti, V, Cr, Mn, Fe, Co, Ni, Cu, Zn, Zr, Nb, Mo, Sn, Hf, Ta, W, or Pb.
S200: Mix and sinter the core material and MₐO_{b}

In some embodiments of the present application, the core material in step S100 and MₐO_{b} are mixed and sintered, and a surface of the core material is coated with a first coating layer including MₐO_{b}, where M includes at least one of Ti, Al, Mg, Fe, Cu, Zn, Mn, Ni, or Co, 1≤a≤7, and 1≤b≤12, to obtain a positive electrode active material. Specifically, during sintering, free sodium ions (residual alkali) on the surface of the core material enter a crystal structure of the core material, to increase sodium ions in the core material. Therefore, the first coating layer including MₐO_{b} formed during the sintering does not deteriorate first-cycle Coulombic efficiency of the positive electrode active material.

In an example, the core material was uniformly mixed with a solvent like anhydrous ethanol, and after MₐO_{b} was added and uniformly mixed, the solvent was obtained through vacuum evaporation (at 70°C to 100°C, for example, 70°C, 80°C, 90°C, or 100°C) by a rotary evaporator. Subsequently, a filter cake was washed a plurality of times by using a suction filtration apparatus, and the filter cake was dried in a vacuum oven. Subsequently, a powder material was sintered at 250°C to 550°C for 2h to 8h under a nitrogen atmosphere, to form the first coating layer including MₐO_{b} on the surface of the core material. For example, a sintering temperature may range from 300°C to 500°C, 350°C to 450°C, or 350°C to 400°C. For example, sintering time may range from 3h to 7h, 4h to 6h, or 5h to 6h. The dense first coating layer may be formed on a surface of a core at the sintering temperature, to improve environmental stability and moisture resistance of the material, thereby improving cycle performance of a battery including the material.

In some embodiments of the present application, the core material and a carbon source are mixed and sintered in advance before the core material and MₐO_{b} are mixed and sintered, so that a second coating layer including carbon may be formed on the surface of the core material, to improve environmental stability, moisture resistance, and conductivity of the positive electrode active material, thereby improving the cycle performance and kinetic performance of the battery including the positive electrode active material.

In some embodiments of the present application, the core material and the carbon source are mixed and sintered. Nitrogen is used as a protective gas, the temperature is increased to 500°C to 600°C, for example, 520°C to 580°C, or 540°C to 560°C, and the temperature is maintained for 6h to 14h, for example, 7h to 13h, 8h to 12h, 9h to 11h, or 10h to 11h, to perform sintering. As a non-carbon element in the carbon source is deintercalated, the second coating layer including carbon is formed on the surface of the core material.

In an example, the carbon source may include at least one of sucrose, tannic acid, polyethylene glycol, polyvinylpyrrolidone, glucose, ascorbic acid, or citric acid.

A third aspect of the present application provides a positive electrode plate. The positive electrode plate includes the positive electrode active material according to the first aspect of the present application or a positive electrode active material obtained by using the method according to the second aspect of the present application.

The positive electrode plate includes a positive electrode current collector and a positive electrode active material layer arranged on at least one surface of the positive electrode current collector, where the positive electrode active material layer includes the foregoing positive electrode active material or the foregoing positive electrode active material obtained by using the method.

In an example, the positive electrode current collector has two surfaces opposite to each other in a thickness direction of the positive electrode current collector, and the positive electrode active material layer is arranged on either or both of the two opposite surfaces of the positive electrode current collector.

In some embodiments of the present application, the positive electrode current collector may use a metal foil or a composite negative electrode current collector. For example, for the metal foil, an aluminum foil may be used. The composite negative electrode current collector may include a polymer material substrate and a metal layer formed on at least one surface of the polymer material substrate. The composite negative electrode current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments of the present application, the positive electrode active material layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluoroacrylate resin.

In some embodiments of the present application, the positive electrode active material layer further optionally includes a conductive agent. In an example, the conductive agent may include at least one of superconducting carbon, acetylene black, carbon black, Ketjen black, carbon dots, carbon nanotubes, graphene, or carbon nanofibers.

In some embodiments of the present application, the positive electrode plate may be prepared in the following manner: The foregoing components for preparing the positive electrode plate, for example, the positive electrode active material, the conductive agent, the binder, and any other components, are dispersed in a solvent (for example, N-methyl pyrrolidone) to form positive electrode slurry. The positive electrode slurry is coated on the positive electrode current collector, followed by drying, cold pressing, and other procedures, to obtain the positive electrode plate.

A fourth aspect of the present application provides a battery. The battery includes the positive electrode plate according to the third aspect of the present application.

In some embodiments the present application, the battery includes a sodium-ion battery.

Generally, the battery includes a positive electrode plate, a negative electrode plate, an electrolyte, and a separator. During charging and discharging of the battery, active ions move between the positive electrode plate and the negative electrode plate for intercalation and deintercalation. The electrolyte transmits ions between the positive electrode plate and the negative electrode plate. The separator is arranged between the positive electrode plate and the negative electrode plate to mainly play a role in preventing a short circuit between a positive electrode and a negative electrode while allowing ions to pass through.

The negative electrode plate includes a negative electrode current collector and a negative electrode active material layer arranged on at least one surface of the negative electrode current collector. The negative electrode active material layer includes a polymer according to the first aspect of the present application.

In an example, the negative electrode current collector has two surfaces opposite to each other in a thickness direction of the negative electrode current collector, and the negative electrode active material layer is arranged on either or both of the two opposite surfaces of the negative electrode current collector.

In some embodiments of the present application, the negative electrode current collector may use a metal foil or a composite current collector. For example, for the metal foil, a copper foil may be used. The composite current collector may include a polymer material substrate and a metal layer formed on at least one surface of the polymer material substrate. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments of the present application, the negative electrode active material may be a negative electrode active material used for batteries well-known in the art. In an example, the negative electrode active material may include at least one of the following materials: artificial graphite, natural graphite, soft carbon, hard carbon, a silicon-based material, a tin-based material, lithium titanate, and the like. The silicon-based material may include at least one of elemental silicon, a silicon oxide, a silicon-carbon composite, a silicon-nitrogen composite, or a silicon alloy. The tin-based material may include at least one of elemental tin, a tin oxide compound, or a tin alloy. However, the present application is not limited to such materials, and may alternatively use other conventional materials that can be used as negative electrode active materials for batteries. Only one or a combination of two or more of the negative electrode active materials may be used.

In some embodiments of the present application, the negative electrode active material layer further optionally includes a conductive agent. The conductive agent may include at least one of superconducting carbon, acetylene black, carbon black, Ketjen black, carbon dots, carbon nanotubes, graphene, or carbon nanofibers.

In some embodiments of the present application, the negative electrode active material layer further optionally includes another adjuvant like a thickener (for example, sodium carboxymethyl cellulose (CMC-Na)).

In some embodiments of the present application, the negative electrode plate may be prepared in the following manner: The foregoing components for preparing the negative electrode plate, for example, the negative electrode active material, the conductive agent, the binder, and any other components, are dispersed in a solvent (for example, deionized water) to form negative electrode slurry. The negative electrode slurry is coated on the negative electrode current collector, followed by drying, cold pressing, and other procedures, to obtain the negative electrode plate.

A type of the electrolyte is not specifically limited in the present application, and may be selected according to requirements. For example, the electrolyte may be liquid, gelled, or all solid.

In some embodiments of the present application, the electrolyte uses an electrolyte solution. The electrolyte solution includes an electrolyte salt and a solvent.

In some embodiments of the present application, the electrolyte sodium salt may include at least one of sodium hexafluorophosphate, sodium difluoro(oxalato)borate, sodium tetrafluoroborate, sodium bisoxalatoborate, sodium perchlorate, sodium hexafluoroarsenate, sodium bis(fluorosulfonyl)imide, sodium trifluoromethylsulfonate, or sodium bis(trifluoromethylsulfonyl)imide.

In some embodiments of the present application, the solvent may include at least one of ethyl carbonate, propyl carbonate, methyl ethyl carbonate, diethyl carbonate, dimethyl carbonate, dipropyl carbonate, methyl propyl carbonate, ethylene propyl carbonate, butyl carbonate, fluoro ethyl carbonate, methyl formate, methyl acetate, ethyl acetate, propyl acetate, methyl propionate, ethyl propionate, propyl propanoate, methyl butyrate, ethyl butyrate, 1,4-butyrolactone, sulfolane, dimethyl sulfone, ethylene glycol dimethyl ether, methyl ethyl sulfone, or diethyl sulfone.

In some embodiments of the present application, the electrolyte solution optionally includes an additive. For example, the additive may include a negative electrode film forming additive, a positive electrode film forming additive, and may further include an additive that can improve particular battery performance, for example, an additive that improves battery overcharging performance or an additive that improves high or low temperature performance of the battery.

A type of the separator is not particularly limited in the present application, and any well-known separator with a porous structure having good chemical stability and mechanical stability may be selected.

In some embodiments, a material of the separator may include at least one of glass fiber, nonwoven cloth, polyethylene, polypropylene, or polyvinylidene fluoride. The separator may be a single-layer film or a multi-layer composite film without special limitations. When the separator is the multi-layer composite film, a material in each layer may be identical or different, which is not particularly limited.

In some embodiments, the positive electrode plate, the negative electrode plate, and the separator can be made into an electrode assembly through a winding process or a lamination process.

In some embodiments, a secondary battery may include an outer package. The outer package may be used for encapsulating the foregoing electrode assembly and the electrolyte.

In some embodiments, the outer package of the secondary battery may be a hard housing, for example, a hard plastic housing, an aluminum housing, or a steel housing. The outer package of the secondary battery may also be a soft package, for example, a pouch-type soft package. A material of the soft package may be plastic, and examples of the plastic may include polypropylene, polybutylene terephthalate, polybutylene succinate, and the like.

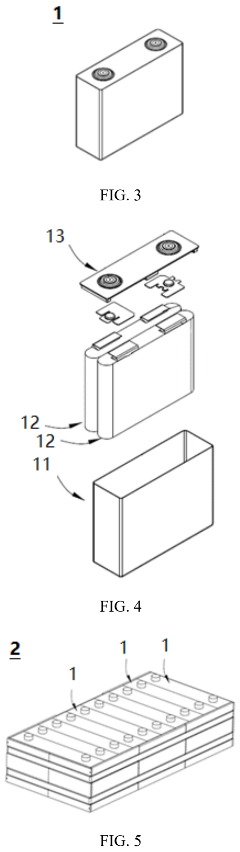

A shape of the battery is not particularly limited in the present application, and may be a cylinder, a square, or in any other shape. For example, FIG. 3 shows a battery cell 1 of a square structure as an example.

In some embodiments, referring to FIG. 4, an outer package may include a housing 11 and a cover plate 13. The housing 11 may include a bottom plate and side plates connected to the bottom plate, and the bottom plate and the side plates enclose an accommodating cavity. The housing 11 has an opening in communication with the accommodating cavity, and the cover plate 13 can cover the opening to close the accommodating cavity. A positive electrode plate, a negative electrode plate, and a separator may form an electrode assembly 12 through a winding process or a lamination process. The electrode assembly 12 is encapsulated in the accommodating cavity. An electrolyte solution infiltrates into the electrode assembly 12. One or more electrode assemblies 12 may be included in the battery cell 1. A person skilled in the art may select the electrode assembly according to an actual requirement.

In some embodiments, the battery may be assembled into a battery module. The battery module may include one or more secondary batteries, and the exact quantity may be selected by a person skilled in the art based on usage and capacity of the battery module.

FIG. 5 shows a battery module 2 as an example. Referring to FIG. 5, in the battery module 2, a plurality of battery cells 1 may be sequentially arranged in a length direction of the battery module 2. Certainly, the plurality of battery cells 1 may alternatively be arranged in any other manner. Further, the plurality of battery cells 1 may be fixed through fasteners.

Optionally, the battery module 2 may further include a casing with an accommodating space, and the plurality of battery cells 1 are accommodated in the accommodating space.

**In** some embodiments, the battery module may alternatively be assembled into a battery pack. The battery pack may include one or more battery modules, and the exact quantity may be selected by a person skilled in the art based on usage and capacity of the battery pack.

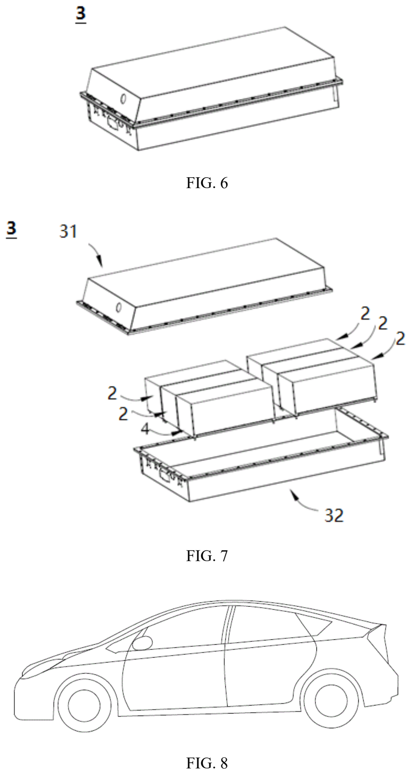

FIG. 6 and FIG. 7 show a battery pack 3 as an example. Referring to FIG. 6 and FIG. 7, the battery pack 1 may include a battery box and a plurality of battery modules 2 arranged in the battery box. The battery box includes an upper box 31 and a lower box 32. The upper box 31 can cover the lower box 32, to form a closed space for accommodating the battery modules 2. The plurality of battery modules 2 may be arranged in the battery box in any manner.

In addition, the present application further provides a power consuming apparatus. The power consuming apparatus includes at least one of the secondary battery, the battery module, or the battery pack provided in the present application. The secondary battery, the battery module, or the battery pack may be used as a power supply of the power consuming apparatus, and may also be used as an energy storage unit of the power consuming apparatus. The power consuming apparatus may include, but is not limited to, a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The secondary battery, the battery module, or the battery pack may be selected according to use requirements of the power consuming apparatus.

FIG. 8 shows a power consuming apparatus as an example. The power consuming apparatus is an all-electric vehicle, a hybrid electric vehicle, a plug-in hybrid electric vehicle, or the like. To satisfy requirements of the power consuming apparatus for high power and a high energy density of the secondary battery, the battery pack or the battery module may be used.

In another example, the apparatus may be a mobile phone, a tablet computer, a notebook computer, or the like. The apparatus is generally required to be light and thin, and can use a battery as a power supply.

Examples of the present application are described below. The examples described below are exemplary and only used to explain the present application, and should not be construed as a limitation on the present application. Where specific techniques or conditions are not specified in the examples, the techniques or conditions described in the literatures of the art or the product specifications are followed. Where no manufacturer is indicated for the reagents or instruments used, they are conventional products that can be commercially obtained.

### Example 1

### 1. Preparation of a positive electrode plate

### (1) Preparation of a positive electrode active material

A material of Na₄Fe₃(PO₄)₂P₂O₇ was uniformly mixed in anhydrous ethanol as a solvent, and titanium dioxide sol was added to the solvent, where a mass ratio of the material of Na₄Fe₃(PO₄)₂P₂O₇ to the solvent was 80:200. The solvent was obtained through vacuum evaporation (at 80°C) by a rotary evaporator. Subsequently, the material was washed by using a suction filtration apparatus, and a filter cake was dried in a vacuum oven. Subsequently, a powder material was sintered at 300°C for 6h under a nitrogen atmosphere. After the temperature was reduced naturally, a first coating layer including titanium dioxide was formed on a surface of the material of Na₄Fe₃(PO₄)₂P₂O₇. In other words, the positive electrode active material was formed.

### (2) Preparation of the positive electrode plate

Polyvinylimide flouride as a binder was fully dissolved in N-methypyrrolidone, and carbon black as a conductive agent and the positive electrode active material were added to make uniformly dispersed slurry, where a mass ratio of polyvinylimide flouride as the binder to carbon black as the conductive agent and the positive electrode active material was 10:20:70. The slurry was uniformly coated on two side surfaces of an aluminum foil, and then was transferred to a vacuum drying oven and dried completely. An obtained plate was rolled, and then was punched, to obtain the positive electrode plate.

### 2. Preparation of a negative electrode plate

Hard carbon as a negative electrode active material, carbon black (Super P) as a conductive agent, styrene-butadiene rubber (SBR) as a binder, and sodium carboxymethyl cellulose (CMC-Na) were uniformly mixed in an appropriate amount of deionized water as a solvent at a mass ratio of 96:1.5:1.5:1, to obtain negative electrode slurry. The negative electrode slurry was coated on two side surfaces of a copper foil as a negative current collector, followed by drying and cold pressing, to form a negative electrode active material layer on the two side surfaces of the negative current collector. Finally, after slitting and cutting procedures were performed, the negative electrode plate was obtained.

### 3. Preparation of an electrolyte solution

In a glove box under an argon atmosphere (H₂O<0.1 ppm, and O₂<0.1 ppm), a sufficiently dried electrolyte salt NaPF₆ was dissolved in ethylene glycol dimethyl ether. After uniform mixing was performed, an electrolyte solution with a concentration of 0.5 mol/L was obtained.

### 4. Preparation of a separator

A polypropylene film was used as the separator.

### 5. Preparation of a secondary battery

The positive electrode plate, the separator, and the negative electrode plate were laminated in sequence, to cause the separator to isolate the positive electrode plate and the negative electrode plate from each other. Then, the positive electrode plate, the separator, and the negative electrode plate were wound to obtain an electrode assembly. The electrode assembly was placed in an outer package, and the foregoing prepared electrolyte solution was injected to a dried sodium-ion battery, followed by procedures such as vacuum encapsulation, standing, formation, and shaping, to obtain the sodium-ion battery.

Methods for preparing a sodium-ion battery in Example 2 to Example 35 and Comparative example 1 are the same as that in Example 1, and a difference lies in that compositions of positive electrode active materials are different, which are specifically shown in Table 1.

### Example 36

### Preparation of a negative electrode plate

Carbon black (Super P) as a conductive agent and styrene-butadiene rubber (SBR) as a binder were uniformly mixed in an appropriate amount of deionized water as a solvent at a mass ratio of 1.5:1.5, to obtain negative electrode slurry. The negative electrode slurry was coated on two side surfaces of a copper foil as a negative current collector, followed by drying and cold pressing, to form a negative electrode active material layer on the two side surfaces of the negative current collector. Finally, after slitting and cutting procedures were performed, the negative electrode plate was obtained. The remaining steps such as preparation of a positive electrode plate, an electrolyte solution, a separator, and a sodium-ion battery were the same as those in Example 1.

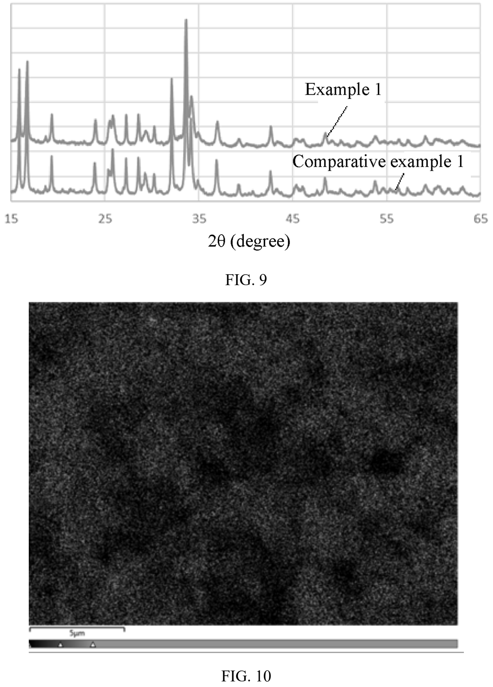

An XRD comparison diagram of positive electrode active materials in Example 1 and Comparative example 1 is shown in FIG. 9. It can be learned from FIG. 9 that, a peak emergence location of a XRD pattern of the positive electrode active material in Example 1 and Comparative example 1 is the same as a peak emergence location of a XRD pattern of the positive electrode active material in Comparative example 1. This indicates that in Example 1, the first coating layer coating an outer surface of a core does not damage a lattice structure of a core material; and because a first coating amount is smaller, a characteristic peak of a material of a coating layer does not appear in an XRD diffusion peak.

A distribution diagram (referring to a testing method in GB/T 17359-2012) of Ti elements in an EDS spectrum of the positive electrode active material in Example 1 is shown in FIG. 10, which shows that the Ti elements are uniformly distributed in the first coating layer on a surface of the positive electrode active material.

**Table 1**

| | Positive electrode active material | | | | | |
|---|---|---|---|---|---|---|
| | Core | | First coating layer | | | z/w |
| | Composition | Residual alkali content z% | Composition | Content w% | Thickness/nm | |
| Example 1 | Na₄Fe₃(PO₄)₂P₂O₇ | 0.5 | TiO₂ | 2 | 5 | 0.25 |
| Example 2 | Na₄Fe₃(PO₄)₂P₂O₇ | 0.5 | Al₂O₃ | 2 | 5 | 0.25 |
| Example 3 | Na₄Fe₃(PO₄)₂P₂O₇ | 0.5 | Nb₂O₅ | 2 | 5 | 0.25 |
| Example 4 | Na₄Fe₃(PO₄)₂P₂O₇ | 0.5 | MgO | 2 | 5 | 0.25 |
| Example 5 | Na₄Fe₃(PO₄)₂P₂O₇ | 0.5 | Co₃O₄ | 2 | 5 | 0.25 |
| Example 6 | Na₄Fe₃(PO₄)₂P₂O₇ | 0.5 | CaTiO₃ | 2 | 5 | 0.25 |
| Example 7 | Na₄Fe₃(PO₄)₂P₂O₇ | 0.5 | Bi₄Ti₃O₁₂ | 2 | 5 | 0.25 |
| Example 8 | Na₄Fe₃(PO₄)₂P₂O₇ | 0.5 | BaTiO₃ | 2 | 5 | 0.25 |
| Example 9 | Na₄Fe₃(PO₄)₂P₂O₇ | 0.5 | MnO₂ | 2 | 5 | 0.25 |
| Example 10 | Na₄Fe₃(PO₄)₂P₂O₇ | 0.5 | ZnO | 2 | 5 | 0.25 |
| Example 11 | Na₄Fe₃(PO₄)₂P₂O₇ | 0.5 | ZrO₂ | 2 | 5 | 0.25 |
| Example 12 | Na₄Fe₃(PO₄)₂P₂O₇ | 0.5 | WO₃ | 2 | 5 | 0.25 |
| Example 13 | Na₄Fe₃(PO₄)₂P₂O₇ | 0.2 | TiO₂ | 2 | 5 | 0.1 |
| Example 14 | Na₄Fe₃(PO₄)₂P₂O₇ | 0.4 | TiO₂ | 2 | 5 | 0.2 |
| Example 15 | Na₄Fe₃(PO₄)₂P₂O₇ | 0.6 | TiO₂ | 2 | 5 | 0.3 |
| Example 16 | Na₄Fe₃(PO₄)₂P₂O₇ | 1 | TiO₂ | 2 | 5 | 0.5 |
| Example 17 | Na₄Fe₃(PO₄)₂P₂O₇ | 1.2 | TiO₂ | 2 | 5 | 0.6 |
| Example 18 | Na₄Fe₃(PO₄)₂P₂O₇ | 2 | TiO₂ | 2 | 5 | 1 |
| Example 19 | Na₄Fe₃(PO₄)₂P₂O₇ | 2.5 | TiO₂ | 2 | 5 | 1.25 |
| Example 20 | Na₄Fe₃(PO₄)₂P₂O₇ | 3 | TiO₂ | 2 | 5 | 1.5 |
| Example 21 | Na₄Fe₃(PO₄)₂P₂O₇ | 0.5 | TiO₂ | 1 | 5 | 0.5 |
| Example 22 | Na₄Fe₃(PO₄)₂P₂O₇ | 0.5 | TiO₂ | 1.5 | 5 | 0.33 |
| Example 23 | Na₄Fe₃(PO₄)₂P₂O₇ | 0.5 | TiO₂ | 2.5 | 5 | 0.20 |
| Example 24 | Na₄Fe₃(PO₄)₂P₂O₇ | 0.5 | TiO₂ | 3 | 5 | 0.17 |
| Example 25 | Na₄Fe₃(PO₄)₂P₂O₇ | 0.18 | TiO₂ | 3 | 5 | 0.06 |
| Example 26 | Na₄Fe₃(PO₄)₂P₂O₇ | 1 | TiO₂ | 1.2 | 5 | 0.83 |
| Example 27 | Na₄Fe₃(PO₄)₂P₂O₇ | 3 | TiO₂ | 1 | 5 | 3.00 |
| Example 28 | Na₄Ni₃(PO₄)₂P₂O₇ | 0.5 | TiO₂ | 2 | 5 | 0.25 |
| Example 29 | Na₄Co₃(PO₄)₂P₂O₇ | 0.5 | TiO₂ | 2 | 5 | 0.25 |
| Example 30 | Na₄Mn₃(PO₄)₂P₂O₇ | 0.5 | TiO₂ | 2 | 5 | 0.25 |
| Example 31 | Na₇V₄(PO₄)₄P₂O₇ | 0.5 | TiO₂ | 2 | 5 | 0.25 |
| Example 32 | Na₄Fe₃(PO₄)₂P₂O₇ | 0.5 | TiO₂ | 2 | 1 | 0.25 |
| Example 33 | Na₄Fe₃(PO₄)₂P₂O₇ | 0.5 | TiO₂ | 2 | 2 | 0.25 |
| Example 34 | Na₄Fe₃(PO₄)₂P₂O₇ | 0.5 | TiO₂ | 2 | 8 | 0.25 |
| Example 35 | Na₄Fe₃(PO₄)₂P₂O₇ | 0.5 | TiO₂ | 2 | 10 | 0.25 |
| Example 36 | Na₄Fe₃(PO₄)₂P₂O₇ | 0.5 | TiO₂ | 2 | 5 | 0.25 |
| Comparative example 1 | Na₄Fe₃(PO₄)₂P₂O₇ | 0.5 | / | / | / | / |

### Example 37

### Preparation of a positive electrode active material

A material of Na₄R₃(PO₄)₂P₂O₇ and glucose were mixed and sintered, nitrogen was used as a protective gas, a temperature was increased to 550°C, and the temperature was maintained for 4h. As a non-carbon element in glucose was deintercalated, a second coating layer including carbon was formed on a surface of a core material. A core on which the second coating layer was formed was placed in anhydrous ethanol as a solvent, and titanium dioxide sol was added to the solvent, where a mass ratio of the material of Na₄Fe₃(PO₄)₂P₂O₇ to the solvent was 80:200. The solvent was obtained through vacuum evaporation (at 80°C) by a rotary evaporator. Subsequently, the material was washed by using a suction filtration apparatus, and a filter cake was dried in a vacuum oven. Subsequently, a powder material was sintered at 300°C for 6h under a nitrogen atmosphere. After the temperature was reduced naturally, a first coating layer including titanium dioxide was formed on a surface of the second coating layer. In other words, the positive electrode active material was formed.

The remaining steps such as preparation of a positive electrode plate, a negative electrode plate, an electrolyte solution, a separator, and the sodium-ion battery were the same as those in Example 1.

Methods for preparing a sodium-ion battery in Example 38 to Example 44 and Comparative example 2 are the same as that in Example 37, and a difference lies in that compositions of positive electrode active materials are different, which are specifically shown in Table 2.

### Example 45

### Preparation of a negative electrode plate

Carbon black (Super P) as a conductive agent and styrene-butadiene rubber (SBR) as a binder were uniformly mixed in an appropriate amount of deionized water as a solvent at a mass ratio of 1.5:1.5, to obtain negative electrode slurry. The negative electrode slurry was coated on two side surfaces of a copper foil as a negative current collector, followed by drying and cold pressing, to form a negative electrode active material layer on the two side surfaces of the negative current collector. Finally, after slitting and cutting procedures were performed, the negative electrode plate was obtained. The remaining steps such as preparation of a positive electrode plate, an electrolyte solution, a separator, and a sodium-ion battery were the same as those in Example 37.

**Table 2**

| | Positive electrode active material | | | | | | | |
|---|---|---|---|---|---|---|---|---|
| | Core | | | First coating layer | | | z/w | n/w |
| | Composition | Residual alkali content z% | Content n% of carbon in a second coating layer | Composition | Content w% | Thicknes s/nm | | |
| Example 37 | Na₄Fe₃(PO₄)₂P₂O₇ | 0.5 | 0.5 | TiO₂ | 2 | 5 | 0.25 | 0.25 |
| Example 38 | Na₄Fe₃(PO₄)₂P₂O₇ | 0.5 | 0.8 | TiO₂ | 2 | 5 | 0.25 | 0.40 |
| Example 39 | Na₄Fe₃(PO₄)₂P₂O₇ | 0.5 | 1 | TiO₂ | 2 | 5 | 0.25 | 0.50 |
| Example 40 | Na₄Fe₃(PO₄)₂P₂O₇ | 0.5 | 1.2 | TiO₂ | 2 | 5 | 0.25 | 0.60 |
| Example 41 | Na₄Fe₃(PO₄)₂P₂O₇ | 0.5 | 1.5 | TiO₂ | 2 | 5 | 0.25 | 0.75 |
| Example 42 | Na₄Fe₃(PO₄)₂P₂O₇ | 0.5 | 0.5 | TiO₂ | 1 | 5 | 0.50 | 0.50 |
| Example 43 | Na₄Fe₃(PO₄)₂P₂O₇ | 0.5 | 1 | TiO₂ | 2.97 | 5 | 0.17 | 0.34 |
| Example 44 | Na₄Fe₃(PO₄)₂P₂O₇ | 0.5 | 1.5 | TiO₂ | 2.3 | 5 | 0.22 | 0.65 |
| Example 45 | Na₄Fe₃(PO₄)₂P₂O₇ | 0.5 | 0.5 | TiO₂ | 2 | 5 | 0.25 | 0.25 |
| Comparative example 2 | Na₄Fe₃(PO₄)₂P₂O₇ | 0.5 | 1 | / | / | / | / | / |

Environmental stability of the positive electrode active materials in Example 1 to Example 45, Comparative example 1, and Comparative example 2, and first-cycle Coulombic efficiency and cycle performance of the obtained sodium-ion batteries are represented, and representation results are shown in Table 3.

### (1) Environmental stability of the positive electrode active material

The positive electrode active material was exposed to an environment of room temperature (with a humidity of approximately 10%), and a water content of the positive electrode active material was tested separately at 0 min and 60 min. For a specific testing method, reference may be made to a testing method in GB/T 11133-2015.

### (2) First-cycle Coulombic efficiency of the sodium-ion battery

At 0°C, the sodium-ion secondary battery was charged to 3.75 V at a constant current of 1/3C, and then was charged at a constant voltage of 3.75 V until a current decreased to 0.05C, to obtain a first-circle charge capacity (C_{c1}). Then, the sodium-ion secondary battery was discharged to 1.5 V at the constant current of 1/3C, to obtain a first-circle discharge capacity (C_{d1}). The first-cycle Coulombic efficiency of the sodium-ion battery=first-cycle discharge capacity (Cd1)/first-cycle charge capacity (Cc1)*100%.

### (3) Cycle performance test

An ambient temperature was controlled to 25°C, the battery was charged to 3.65 V at 1C, then was charged to 0.05C at a constant voltage, left standing for 10 min, and then was discharged to 1.5 V at 1C, and a discharge capacity was recorded as C₀. 300 cycles were performed according to the foregoing charging and discharging procedure, a discharge capacity of a 300^{th} circle was C₁, and a cycle capacity retention ratio of a battery cell=C₁/C₀*100%.

**Table 3**

| | Water content/ppm of a positive electrode active material | | Battery | |
|---|---|---|---|---|
| | 0 min | 60 min | First-cycle Coulombic efficiency % | Capacity retention rate % |
| Example 1 | 298 | 1059 | 99.93 | 98.05 |
| Example 2 | 302 | 1146 | 99.89 | 97.98 |
| Example 3 | 299 | 1222 | 99.87 | 97.93 |
| Example 4 | 304 | 1189 | 99.91 | 97.96 |
| Example 5 | 302 | 1157 | 99.85 | 97.89 |
| Example 6 | 301 | 1175 | 99.88 | 97.83 |
| Example 7 | 299 | 1198 | 99.9 | 97.79 |
| Example 8 | 313 | 1212 | 99.86 | 97.34 |
| Example 9 | 307 | 1254 | 99.85 | 97.76 |
| Example 10 | 303 | 1279 | 99.79 | 97.56 |
| Example 11 | 321 | 1235 | 99.80 | 97.78 |
| Example 12 | 306 | 1288 | 99.83 | 97.71 |
| Example 13 | 276 | 1059 | 99.95 | 98.07 |
| Example 14 | 284 | 1108 | 99.93 | 98.06 |
| Example 15 | 299 | 1122 | 99.91 | 98.03 |
| Example 16 | 587 | 1356 | 98.05 | 95.01 |
| Example 17 | 693 | 1458 | 97.96 | 93.56 |
| Example 18 | 807 | 1599 | 96.54 | 92.09 |
| Example 19 | 956 | 1753 | 95.69 | 91.45 |
| Example 20 | 1078 | 1567 | 97.01 | 92.03 |
| Example 21 | 317 | 1287 | 99.63 | 97.34 |
| Example 22 | 278 | 1023 | 99.72 | 98.03 |
| Example 23 | 289 | 1055 | 98.88 | 97.95 |
| Example 24 | 345 | 1287 | 98.55 | 97.01 |
| Example 25 | 286 | 1238 | 98.68 | 97.23 |
| Example 26 | 587 | 1489 | 97.32 | 92.71 |
| Example 27 | 1078 | 1967 | 93.98 | 89.58 |
| Example 28 | 354 | 1231 | 99.01 | 97.65 |
| Example 29 | 304 | 1156 | 98.79 | 97.62 |
| Example 30 | 367 | 1182 | 98.28 | 97.54 |
| Example 31 | 421 | 1324 | 98.89 | 97.68 |
| Example 32 | 521 | 1456 | 97.29 | 96.23 |
| Example 33 | 402 | 1362 | 99.92 | 97.86 |
| Example 34 | 265 | 776 | 97.34 | 96.55 |
| Example 35 | 481 | 1398 | 96.52 | 96.01 |
| Example 36 | 298 | 1059 | 98.91 | 98.73 |
| Comparative example 1 | 313 | 2265 | 93.53 | 89.01 |
| Example 37 | 442 | 1502 | 98.36 | 96.01 |
| Example 38 | 369 | 1273 | 99.84 | 98.02 |
| Example 39 | 389 | 1307 | 98.61 | 96.19 |
| Example 40 | 398 | 1481 | 98.59 | 96.17 |
| Example 41 | 452 | 1532 | 98.38 | 95.78 |
| Example 42 | 548 | 1651 | 98.25 | 95.67 |
| Example 43 | 308 | 1267 | 99.38 | 96.89 |
| Example 44 | 331 | 1102 | 99.93 | 98.38 |
| Example 45 | 384 | 1269 | 98.93 | 98.75 |
| Comparative example 2 | 312 | 1590 | 93.65 | 90.76 |

Conclusion: By comparing Example 1 to Example 36 with Comparative example 1, the water contents of the positive electrode active materials after 60 min in Example 1 to Example 36 are significantly lower than that of the positive electrode active material in Comparative example 1. This indicates that the positive electrode active materials in Example 1 to Example 36 have higher moisture resistance, and the first-cycle Coulombic efficiency and the capacity retention rates of the batteries corresponding to Example 1 to Example 36 are higher than those in Comparative example 1. By comparing Example 37 to Example 45 with Comparative example 2, the water contents of the positive electrode active materials after 60 min in Example 37 to Example 45 are significantly lower than that of the positive electrode active material in Comparative example 1. This indicates that the positive electrode active materials in Example 37 to Example 45 have higher moisture resistance, and the first-cycle Coulombic efficiency and the capacity retention rates of the batteries corresponding to Example 37 to Example 45 are higher than those in Comparative example 2. In this way, it indicates that when the positive electrode active material in the present application is used, the positive electrode active material has excellent moisture resistance, and the first-cycle Coulombic efficiency and the cycle performance of the battery including the positive electrode active material are improved.

It should be noted that, the present application is not limited to the foregoing embodiments. The foregoing embodiments are only exemplary, and any embodiment having substantially the same technical idea and the same effects within the scope of the technical solutions of the present application shall fall within the technical scope of the present application. In addition, other embodiments constructed by applying various modifications conceivable to a person skilled in the art to the embodiments and combining some of the constituent elements of the embodiments without departing from the scope of the essence of the present application are also included in the scope of the present application.

## Claims

1. A positive electrode active material, comprising:
a core, comprising NaₓR_{y}(PO₄)_{z}(P₂O₇)ₖ, wherein 1≤x≤7, 1≤y≤4, 1≤z≤4, 1≤k≤4, and R comprises at least one of Mg, Al, Sc, Ti, V, Cr, Mn, Fe, Co, Ni, Cu, Zn, Zr, Nb, Mo, Sn, Hf, Ta, W, or Pb; and
a first coating layer, wherein the first coating layer is formed on at least a part of the core, the first coating layer comprises MₐO_{b}, M comprises at least one of Ca, Bi, Ba, Ti, Al, Nb, Mg, Fe, Cu, Zn, Mn, Ni, or Co, 1≤a≤7, and 1≤b≤12.

2. The positive electrode active material according to claim 1, wherein the core comprises at least one of Na₄R₃(PO₄)₂P₂O₇ or Na₇V₄(PO₄)₄P₂O₇, and R comprises at least one of Fe, Ni, Co, or Mn.

3. The positive electrode active material according to claim 1 or 2, wherein MₐO_{b} comprises at least one of TiO₂, Al₂O₃, Nb₂O₅, MgO, Co₃O₄, CaTiO₃, Bi₄Ti₃O₁₂, or BaTiO₃.

4. The positive electrode active material according to any one of claims 1 to 3, wherein based on a total mass of the positive electrode active material, a content of the first coating layer is w%; and
based on a total mass of the core, a residual alkali content of the core is z%, wherein 0.06≤z/w≤3, and optionally 0.06≤z/w≤1.

5. The positive electrode active material according to claim 4, wherein 1%≤w%≤3%, and optionally 1.5%≤w%≤2.5%.

6. The positive electrode active material according to claim 4 or 5, wherein 0.2%≤z%≤3%, and optionally 0.2%≤z%≤0.6%.

7. The positive electrode active material according to any one of claims 1 to 6, wherein a thickness of the first coating layer ranges from 1 nm to 10 nm, and optionally ranges from 2 nm to 8 nm.

8. The positive electrode active material according to any one of claims 4 to 6, wherein the positive electrode active material further comprises a second coating layer, the second coating layer is formed on at least a part of the core, the first coating layer is formed on at least a part of the second coating layer, and the second coating layer comprises carbon.

9. The positive electrode active material according to claim 8, wherein based on the total mass of the positive electrode active material, a content of carbon in the second coating layer is n%, wherein 0.16≤n/w≤1.5, and optionally 0.32≤n/w≤0.8.

10. The positive electrode active material according to claim 9, wherein 0.5%≤n%≤1.5%, and optionally 0.8%≤n%≤1.2%.

11. The positive electrode active material according to any one of claims 1 to 10, wherein the positive electrode active material satisfies at least one of the following conditions:
a volume average particle size Dv50 of the positive electrode active material ranges from 2 µm to 8 µm, and optionally ranges from 2 µm to 5 µm;
Dv99 of the positive electrode active material ranges from 10 µm to 40 µm, and optionally ranges from 15 µm to 30 µm;
a BET specific surface area of the positive electrode active material ranges from 3 m²/g to 11 m²/g, and optionally ranges from 7 m²/g to 10 m²/g; and
a compaction density of the positive electrode active material under a pressure of 100 MPa ranges from 1.3 g/cm³ to 2.1 g/cm³, and optionally ranges from 1.7 g/cm³ to 1.9 g/cm³.

12. A method for preparing a positive electrode active material, comprising:
providing a core material, wherein the core material comprises NaₓR_{y}(PO₄)_{z}(P₂O₇)ₖ, 1≤x≤7, 1≤y≤4, 1≤z≤2, 1≤k≤4, and R comprises at least one of Mg, Al, Sc, Ti, V, Cr, Mn, Fe, Co, Ni, Cu, Zn, Zr, Nb, Mo, Sn, Hf, Ta, W, or Pb; and
mixing and sintering the core material and MₐO_{b}, wherein M comprises at least one of Ti, Al, Mg, Fe, Cu, Zn, Mn, Ni, or Co, 1≤a≤7, and 1≤b≤12, to obtain a positive electrode active material.

13. The method according to claim 12, wherein a sintering temperature ranges from 250°C to 550°C, and holding time ranges from 2h to 8h.

14. The method according to claim 12 or 13, wherein the core material and a carbon source are mixed and sintered in advance before the core material and MₐO_{b} are mixed and sintered.

15. A positive electrode plate, comprising the positive electrode active material according to any one of claims 1 to 11, and/or a positive electrode active material obtained by using the method according to any one of claims 12 to 14.

16. A battery, comprising the positive electrode plate according to claim 15.

17. The battery according to claim 16, wherein the battery comprises a sodium-ion battery.

18. A power consuming apparatus, comprising the battery according to claim 16 or 17.
